(19) Europäisches Patentamt
European Patent Office
Office européen des brevets

(11) **EP 2 122 426 B1**

(12) **EUROPÄISCHE PATENTSCHRIFT**

(45) Veröffentlichungstag und Bekanntmachung des Hinweises auf die Patenterteilung:
**27.06.2012 Patentblatt 2012/26**

(21) Anmeldenummer: **07858189.9**

(22) Anmeldetag: **27.12.2007**

(51) Int Cl.:
***G05B 19/416*** *(2006.01)*

(86) Internationale Anmeldenummer:
**PCT/EP2007/064593**

(87) Internationale Veröffentlichungsnummer:
**WO 2008/080957 (10.07.2008 Gazette 2008/28)**

(54) **ANTRIEBSEINRICHTUNG AUS MEHREREN ANTRIEBEN UND REGELUNG FÜR DIESEN GESAMTANTRIEB**

DRIVE DEVICE COMPRISING A PLURALITY OF DRIVES AND REGULATING SYSTEM FOR THIS OVERALL DRIVE

DISPOSITIF D'ENTRAÎNEMENT COMPOSÉ DE PLUSIEURS MÉCANISMES D'ENTRAÎNEMENT ET RÉGULATION POUR CE MÉCANISME D'ENTRAÎNEMENT GLOBAL

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **27.12.2006 DE 102006061527**

(43) Veröffentlichungstag der Anmeldung:
**25.11.2009 Patentblatt 2009/48**

(73) Patentinhaber: **Lenze Automation GmbH 40667 Meerbusch (DE)**

(72) Erfinder: **FRAEGER, Carsten 31787 Hameln (DE)**

(74) Vertreter: **Leonhard, Frank Reimund Leonhard - Olgemöller - Fricke Patentanwälte Postfach 10 09 62 80083 München (DE)**

(56) Entgegenhaltungen:
**EP-A- 0 583 864      GB-A- 2 261 531
US-A- 5 656 903      US-A- 5 905 351
US-A1- 2003 137 270**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft eine **Antriebseinrichtung** für Bewegungen rotatorischer und/oder translatorischer Art. Auch ein Verfahren und eine Steuereinrichtung ist betroffen. Die Antriebseinrichtung besitzt mehrere Antriebe, insbesondere Maschinen zum gemeinsamen Antrieb einer Arbeitsmaschine oder zur Bewegung einer Masse und eine Steuereinrichtung. Bevorzugt werden zwei Maschinen als Antriebe gekoppelt. Soweit im Folgenden die Zahl "zwei" auftritt, ist sie ein Synonym für die oben genannten mehreren Antriebe/Maschinen.

Bei sehr hohen Anforderungen werden im Stand der Technik Direktantriebe eingesetzt, z.B. Linearmotoren, um Spiel und Elastizität der mechanischen Übertragung zu eliminieren. Dieser hohe Aufwand tritt besonders bei Linearantrieben und langsam drehenden Direktantrieben zu Tage. Neben den hohen Kosten weisen die Antriebe ein großes Volumen und einen schlechten Wirkungsgrad auf.

In vielen Anwendungen für hochpräzise Drehbewegungen kommen heute auch elektromechanische Antriebe für zum Einsatz. Um die geforderten kleinen Drehzahlen für die Arbeitsmaschine zur Verfügung zu stellen, werden Motor-Getriebe-Kombinationen mit spielarmen Planetengetrieben eingesetzt, die für die geforderten Genauigkeiten ausgelegt sind.

Dort, wo die verbleibende Ungenauigkeit der Mechanik durch Getriebelose, Elastizität von Riemen oder Ketten zu groß ist, kommen Direktantriebe zum Einsatz, wie oben dargestellt. Zur Realisierung mechanisch präziser Antriebe werden z.B. folgende Maßnahmen zur Verbesserung der Genauigkeit heute angewendet.

Spielarme Getriebe durch eng tolerierte Verzahnungselemente und spielfreie Kupplungen, z.B. Lamellenkupplung, Metallbalgkupplung sorgen für geringe Winkelfehler.

Drehsteife Übertragungselemente und Getriebe, z.B. Planetengetriebe, dickwandige Gehäuse, erhöhen die erreichbaren Verstärkungen und erreichen ggf. auch geringe Winkelfehler.

Direktantriebe, z.B. langsam drehende Synchronmotoren, vermeiden Fehler durch die mechanische Übertragung.

Den heutigen Lösungen ist gemeinsam, dass der Antrieb für die volle Leistung und die geforderte Präzision ausgelegt werden muss. Dadurch werden die Antriebe teuer. Mit den beschriebenen Maßnahmen sind besonders bei großen Leistungen erhebliche Kosten verbunden. Ein weiteres Problem ist die prozesssichere Realisierung in der Fertigung, z.B. ist die Selektion präziser Verzahnteile für ein spielarmes Getriebe bei großen Drehmomenten nur mit Einschränkungen möglich.

US-A- 5,656,903 (Shui Fang) offenbart eine Antriebseinrichtung zur Bewegung einer Masse und eine Steuereinrichtung, die zwei Antriebe, einen Antrieb zur Bereitstellung der Leistung und einen Antrieb zur Steuerung der Dynamik, ansteuert und regelt.

**Die Aufgabe (Problemstellung)** liegt darin, bei drehzahlgeregelten Antrieben mit hoher Leistung und gleichzeitig hohen Anforderungen an die Genauigkeit oder Dynamik, einen sehr hohen Aufwand für die Leistungselektronik (hohe Taktfrequenz), den Motor (hohe Präzision) und die mechanische Übertragung (spielarme Übertragungselemente) zu reduzieren.

Eine Lösung bringt Anspruch 1. Zumindest ein Antrieb dient zur Bereitstellung der Leistung (Leistungsantrieb) und zumindest ein Antrieb zur Regelung dient der Genauigkeit und/oder Dynamik (Regelantrieb). Die Steuer- und Regeleinrichtung steuert und regelt die zumindest zwei, insbesondere mehreren Antriebe an.

Die beanspruchte Erfindung umfasst damit einen zumindest Doppelantrieb und eine Regelung für einen Doppelantrieb bestehend aus zwei parallel arbeitenden drehzahlveränderlichen Antrieben. Dabei ist ein Teil für die kostengünstige Bereitstellung der Leistung zuständig, während der andere Antrieb für die Genauigkeit des Gesamtantriebs verantwortlich ist.

Bei sehr hohen Anforderungen werden im Stand der Technik Direktantriebe eingesetzt, z.B. Linearmotoren, um Spiel und Elastizität der mechanischen Übertragung zu eliminieren. Dieser hohe Aufwand tritt besonders bei Linearantrieben und langsam drehenden Direktantrieben zu Tage. Neben den hohen Kosten weisen die Antriebe ein großes Volumen und einen schlechten Wirkungsgrad auf. Mit der Erfindung kann dem begegnet werden.

Der Gesamtantrieb besteht aus (zumindest) zwei separaten Antrieben (Antriebskonzept). Der zumindest eine erste Antrieb (Leistungsantrieb) ist für die kostengünstige Bereitstellung einer hohen Leistung optimiert, bspw. durch kleine Schaltfrequenz für den Frequenzumrichter, z.B. bis nur 2 kHz, sensorloser Betrieb, einfacher Motor, z.B. Drehstromasynchronmotor mit normaler Drehzahl, Standardgetriebe mit normalem Spiel zur Anpassung der Motordrehzahl an die Arbeitsmaschinendrehzahl, Zahnriemen zur Übertragung der Drehbewegung in die lineare Bewegung. Der zumindest eine zweite Antrieb (Regelantrieb) ist für die Genauigkeit der Bewegung zuständig. Er kompensiert die Fehler des Leistungsantriebs.

Zur Kompensation ist nur eine kleine Leistung erforderlich, so dass sich kostengünstig ein Regelantrieb aufbauen lässt. Rechnungen für verschiedene Antriebe haben gezeigt, dass ca. 5% der Gesamtleistung für den Regelantrieb benötigt werden. Das Zusammenspiel der beiden Antriebe wird durch eine Regelung vorgenommen, die die Ungenauigkeiten des Leistungsantriebs misst und den Regelantrieb zur Kompensation ansteuert. Dies kann z.B. mit einem Servoregler mit zwei Istwerteingängen realisiert werden.

Damit ergibt sich folgender Nutzen.

Bei hohen Antriebsleistungen kann der größte Teil der Leistung über kostengünstige elektromechanische Antriebe aus Umrichter, Motor und Getriebe zur Verfügung gestellt werden, z.B. über verfügbare Geräte 8200, MDEMA, GST, GKS. Die Genauigkeit und Dynamik stellt ein wesentlich kleinerer Servoantrieb zur Verfügung. Der Servoantrieb kann dabei dabei die komplette Sollwertverarbeitung und Regelung übernehmen und dem Umrichter die Sollwerte zur Verfügung stellen.

Zur Regelung werden eine angepasste Regelungsstruktur und zwei Istwerteingänge verwendet, wie sie an in Benutzung befindlichen Lenze Antriebsreglern ECS, 9300, oder 9400 vorhanden sind.

In Summe entstehen damit aus Standard-Komponenten ein kostengünstiger und leichter Antrieb, dessen Eigenschaften mit denen von teuren und schweren Direktantrieben vergleichbar sind.

Anspruchsvolle Antriebsaufgaben werden erfindungsgemäß mit kostengünstigen Komponenten aus einem Standardportfolio gelöst.

Der Antrieb als "Doppelmaschine" (im Sinne eines Mehrfachantriebs) besteht aus einem kostengünstigen Antrieb zur Bereitstellung der Leistung und einem kleinen Antrieb zur Bereitstellung von Genauigkeit. In Summe entsteht eine Lösung für genaue Antriebe aus kostengünstigen Standardkomponenten, z.B.

- Einem Linearantrieb mit Zahnriemen statt
  Linearmotor.

- Einem Antrieb mit Standardgetriebe statt
  einem Direktantrieb oder einem hochgenauen
  Robotergetriebe.

Der Antrieb (Doppelantrieb aus zwei oder mehr Maschinen) hat wesentliche Vorteile gegenüber konventionellen Direktantriebslösungen (wie eingangs beschrieben)

- geringere Kosten (im Beispiel fast 50% geringer)

- geringeres Gewicht (im Beispiel 70% weniger)

- Aufbau des Leistungspfades aus verfügbaren Komponenten des Standardprogramms

Es können mehrere erste und/oder mehrere zweite Antriebe eingesetzt werden. Beansprucht wird eine Antriebseinrichtung und ein solches Verfahren zum Antrieb einer "Last" über mehrere Motoren gemeinsam. Der Begriff der Last ist dabei allgemein zu verstehen, als das Objekt, welches den von dem Antrieb eingebrachten Bewegungen unterliegt.

Unter Präzision ist hier eine oder mehr der folgenden Eigenschaften zu verstehen: Hohe Steifigkeit des Antriebs gegenüber Störgrößen und Lastsprüngen, Schnelle Regelung mit hoher Grenzfrequenz, kleine Winkelfehler (oder Wegfehler bei linearer Bewegung), z.B. durch Getriebelose, Kupplungsspiel, Regelabweichungen).

Die Steuereinrichtung (Anspruch 14) oder das von ihr ausgeführte Steuerverfahren (Anspruch 13) für die Antriebseinrichtung zur Bewegung rotatorischer und/oder translatorischer Art steuert und regelt die zumindest zwei Antriebe.

Der Regelantrieb erhält als Sollwert eine Differenz aus einem Geschwindigkeitssollwert $(v,\omega)$ für den gesamten Antrieb und einem Istwert eines Gebers (oder eines Beobachters) des oder für den Leistungsantrieb, wobei diese Differenz mit einem Faktor multipliziert und dem Regelantrieb als Sollwert vorgegeben wird. Damit kann der Regelantrieb veranlasst werden, Fehler rotatorischer und/oder translatorischer Art des Leistungsantriebs vollständig zu kompensieren, zumindest im Wesentlichen vollständig (Anspruch 1).

Die Antriebseinrichtung ist mit mehreren Antrieben zum gemeinsamen Antrieb einer Arbeitsmaschine oder zur Bewegung einer Masse als "Last" versehen. Zumindest ein Antrieb erfüllt die Bereitstellung der Leistung (Leistungsantrieb). Zumindest ein Antrieb nimmt die Nachführung der mechanischen Genauigkeit und/oder der verlangten Dynamik als Regelantrieb vor. Mit der Steuereinrichtung werden die zumindest zwei Antriebe angesteuert und geregelt.

Die Antriebe umfassen außer elektrischen Maschinen (elektrischen Antrieben), pneumatische Antriebe, hydraulische Antriebe, Antriebe mit VerbrennungskraftMaschinen oder Strömungsmaschinen oder Kombinationen aus diesen Antrieben, insbesondere mit mechanischem Getriebe, hydraulischem Getriebe oder einer Koppeleinheit ausgerüstet sind.

Besondere Varianten oder Konkretisierungen der unabhängigen Ansprüche sind wie folgt.

Bevorzugt zumindest teilweise besitzen die Antriebe Elektromotoren, die jeweils von einer Leistungselektronik gespeist werden. Zumindest ein Leistungsantrieb ist ein Getriebemotor.

Zumindest einer der Antriebe kann als Bremse ausgebildet sein, insbesondere als ein Elektromotor mit einem auf einen Bremschopper speisenden Umrichter. Zumindest ein Leistungsantrieb kann ein Pneumatikzylinder oder Hydraulikzylinder sein.

Der zumindest eine Regelantrieb kann bevorzugt ein Elektromotor oder Elektrolinearmotor sein, insbesondere zumindest teilweise ausgerüstet mit einem oder mehreren Permanentmagneten.

Eine Umsetzung von rotatorischer Bewegungsart in eine lineare Bewegung kann durch ein Gestänge, eine Zahnstange, ein Zahnriemen oder eine Spindel erfolgen.

Ein elastisches Kuppelelement kann vorgesehen sein, um die zumindest zwei Antriebe jeweils mit der Arbeitsmaschine oder der Masse zu koppeln, insbesondere als Hohlwelle oder von beiden axialen Seiten zur beabstandeten Einbringung von Antriebskraft aus den zumindest zwei Antrieben, dem Leistungs- und dem Regelantrieb.

Auch können mehrere Regelantriebe die Steuerung des zumindest einen Leistungsantriebs vornehmen, insbesondere indem zumindest ein Ventil eines Hydraulik- oder Pneumatikantriebs mechanisch durch einen der Regelantriebe betätigt wird.

An dem zumindest einen Leistungsantrieb kann zumindest ein Sensor zur Messung der Bewegung des Leistungsantriebs vorhanden sein, wobei auch an dem zumindest einen Regelantrieb ein Sensor vorhanden sein kann, zur Messung der Bewegung des Regelantriebs. Zumindest eine der Bewegungssensoren kann durch einen Beobachter ersetzt oder ergänzt werden.

Eine Regeleinheit (Anspruch 8, 10) wertet die Bewegung des (zumindest einen) Leistungsantriebs aus und verwendet dieses Signal zur Steuerung des (zumindest einen) Regelantriebs, bevorzugt über einen Bewegungssensor nahe der Welle des Leistungsantriebs. Eine weitere Regeleinheit wertet die Bewegung des Regelantriebs aus und regelt den Regelantrieb.

Der Sensor zur Messung der Bewegung ist bevorzugt ein Tachogenerator, ein Resolver, ein Beschleunigungssensor, ein optischer Inkrementalgeber, ein magnetischer Inkrementalgeber, ein optischer Absolutwertgeber oder ein magnetischer Absolutwertgeber, bevorzugt angebracht an der Welle des Leistungsantriebs oder nahe dem Leistungsantrieb.

Die Regeleinheit (Anspruch 8, 10) kann mit linearen oder nichtlinearen Größen arbeiten, insbesondere mit einem Beobachter, oder mit einem Zustandsregler. Die Parameter der Regeleinheit sind vorteilhaft so gewählt, dass in einem festgelegten Frequenzbereich die Fehler des (zumindest einen) Leistungsantriebs nahezu vollständig kompensiert werden. Die Parameter der Regeleinheit können aber auch so gewählt sein, dass in einem gegebenen Frequenzbereich Fehler des (zumindest einen) Leistungsantriebs zumindest im wesentlichen kompensiert werden.

Die Regeleinheit steuert den (zumindest einen) Leistungsantrieb und den (zumindest einen) Regelantrieb, als die zumindest zwei Antriebe.

Bauliche Einheiten können begründet werden (Anspruch 12): Der Leistungsantrieb und der Regelantrieb können zu einer solchen zusammengefasst sein. Der Regelantrieb und die Regeleinrichtung können zu einer solchen zusammengefasst sein. Die Leistungselektronik und die Regeleinheit können zu einer solchen zusammengefasst sein. Oder alle Komponenten können zu einer baulichen Einheit zusammengefasst werden.

Die Erfindung wird anhand von Ausführungs **beispielen** erläutert und ergänzt, wobei darauf hingewiesen wird, dass es sich bei der folgenden Darstellung um die Beschreibung von bevorzugten Beispielen der Erfindung handelt.

**Figur 1** ist ein Blockschaltbild für einen Linearantrieb mit Doppelantrieb.

**Figur 1a** ist ein Schema der Figur 1, wobei der gesamte Antrieb in zwei Teilantriebe aufgetrennt wird. Ein Teilantrieb 10, der Leistungsantrieb, stellt die benötigte mechanische Leistung zur Verfügung. Der zweite Teilantrieb 20, der Regelantrieb, dient zur Korrektur von Fehlern, welche der Leistungsantrieb hinterlässt.

**Figur 2** ist ein Blockschaltbild für einen Walzenantrieb mit Mehrfachantrieb.

**Figur 3** ist eine heraus vergrößerte Regelschaltung, wobei der linke Antrieb 10 eine Steuerung und der rechte Antrieb 20 eine Drehzahlregelung erhält. Diese Regelschaltung kann auch für andere Konzepte eingesetzt werden, so das von Figur 2.

**Figur 4** veranschaulicht ein Beispiel zur Auswahl eines Antriebskonzepts für einen Linearantrieb.

**Figur 5** ist eine Zusammenstellung von Komponenten eines konventionellen Direktantriebs.

**Figur 6** ist ein Preisvergleich des Doppelantriebs und des konventionellen Antriebs.

**Figur 7** ist ein Zeitverlauf der Solldrehzahl, der Istdrehzahl und der Drehzahlabweichung bei einem Leistungsantrieb.

**Figur 8** ist der Zeitverlauf der Solldrehzahl, der Istdrehzahl und der Drehzahlabweichung bei einem Doppelantrieb mit Eingriff des Regelantriebs.

**Figur 9** Beispielhaft ein Walzenantrieb mit Getriebelose zur Erläuterung der Figuren 7 und 8 bei einer Leistung größer 20kW. Der Leistungsantrieb ist ein Drehstromgetriebemotor mit Frequenzumrichter. Das Getriebe treibt über eine drehelastische Welle mit der Steifigkeit $C_{LA}$ die Walze an. Mit der Welle ist ein Drehgeber verbunden. Physikalische Werte sind angegeben.

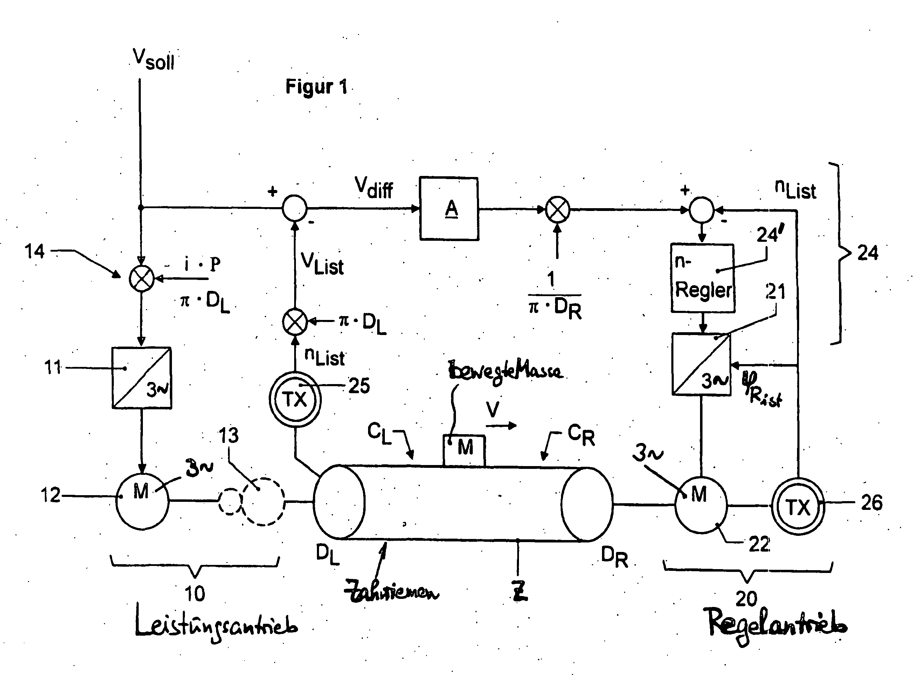

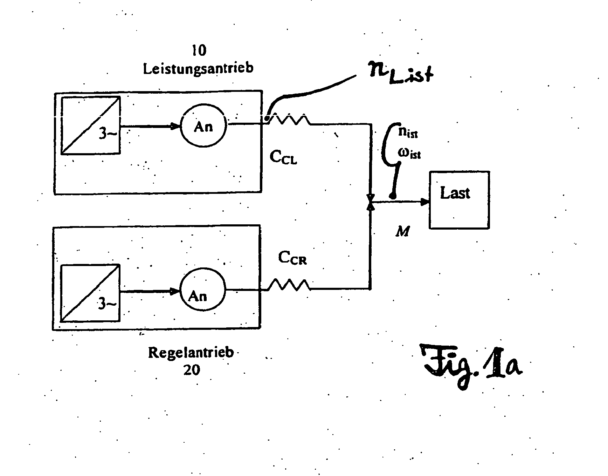

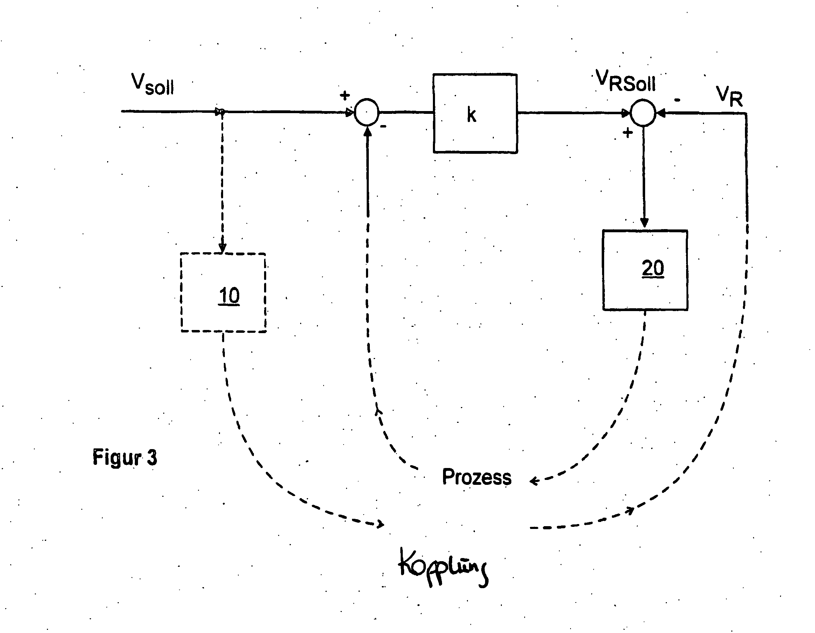

Der Aufbau wird anhand eines Linearantriebs erläutert. Folgende Bilder zeigen die Struktur der Antriebseinrichtung, vgl. **Figur 1 und Figur 3** mit der Regeleinheit.

Der Leistungsantrieb 10 besitzt einen Frequenzumrichter 11, einen Drehstrommotor 12 und ein Getriebe 13. Die Steuerung 14 steuert den Umrichter 11 an. Sie erhält den Sollwert $v_{soll}$ als Regelgröße. Das Getriebe treibt den Zahnriemen Z für eine Linearbewegung v an. Aufgrund der Riemenvorspannung ist der Zahnriemen spielfrei mit dem Zahnriemenrad verbunden. Mit dem Zahnriemenrad ist ein Drehgeber TX oder 25 verbunden. Alternativ kann der Drehgeber über ein eigenes Rad spielfrei mit dem Zahnriemen verbunden sein.

Der Regelantrieb 20 treibt eine Zahnriemenrolle am anderen Ende des Zahnriemens an. Er besteht aus einem drehzahlgeregelten Servoantrieb mit Servomotor 22 und Umrichter 21. Regeleinrichtung 24 wird vom Drehgeber 26 angesteuert. Der Drehgeber ist mit dem Motor 22 gekoppelt. In der Regeleinrichtung 24 ist der Regler 24' als n-Regler vorgesehen. Die Regeleinrichtung umfasst auch die Vorgabe des Sollwertes über den Faktor $\underline{A}$ und den Differenzbildner, der Regler 24' selbst ist nur die Funktion "n-Regler" nach Figur 1, bspw. als ein gängiger Integralregler oder PI-Regler oder ein Tiefpass zweiter Ordnung (vereinfacht).

Der Regelantrieb erhält als Sollwert die Differenz $V_{diff}$ aus dem Geschwindigkeitssollwert $V_{soll}$ für den gesamten Antrieb und dem Istwert $V_{List}$ des Gebers TX oder 25 an der Zahnriemenrolle des Leistungsantriebs 10. Diese Differenz wird so mit einem Faktor $\underline{A}$ multipliziert und dem Regelantrieb 20 als Sollwert gegeben, dass der Regelantrieb die Fehler des Leistungsantriebs vollständig kompensiert, zumindest nahezu oder im Wesentlichen, vgl. Fig. 3.

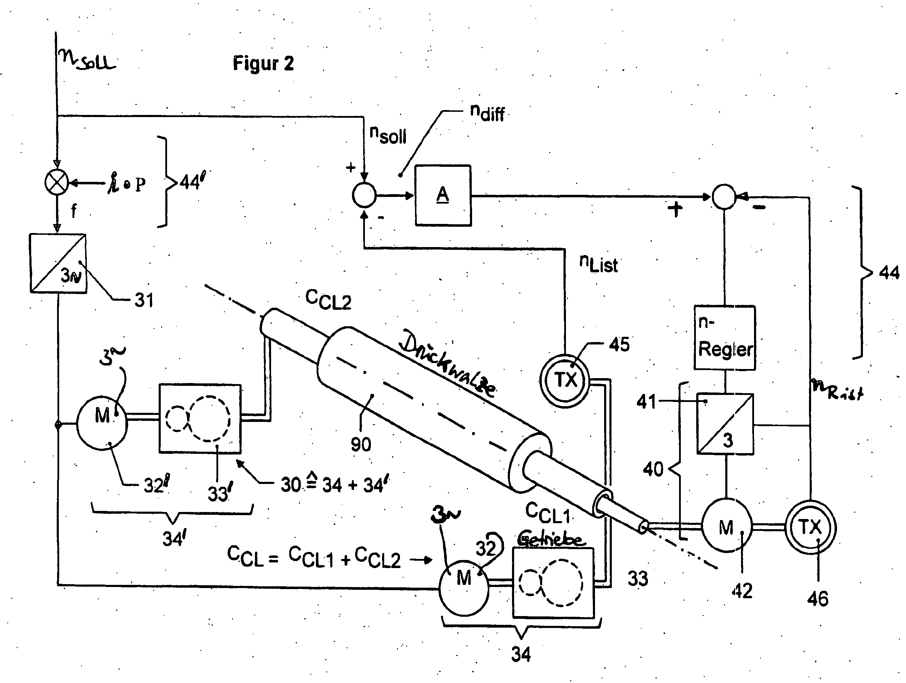

**In Figur 2** ist ein Blockschaltbild für einen Walzenantrieb mit einer Druckwalze 90 und zwei Antriebsseiten für Lastantrieb und Regelantrieb gezeigt. Der Leistungsantrieb 30 besteht aus zwei Getriebemotoren 34, 34'. Jeder dieser Getriebemotoren besteht aus einem Drehstrommotor 32, 32' und einem zugeordneten Getriebe 33, 33'. Jeder Motor 32, 32' wird von einem Frequenzumrichter 31 gespeist, der von einer Steuerung 44' angesteuert wird. Die mechanische Ankopplung jedes der Getriebe 33,33' erfolgt über je eine drehelastische Hohlwelle, von der einen und der gegenüberliegenden axialen Seite der Druckwalze 90. Jede drehelastische Hohlwelle hat eine Steifigkeit. Die Steifigkeit der Hohlwelle zum Getriebe 33 beträgt $C_{CL1}$, die Steifigkeit der gegenüberliegenden Hohlwelle zum Getriebe 33' beträgt $C_{CL2}$.

Mit der einen Hohlwelle ist ein Drehgeber TX oder 45 gekoppelt. Der Drehgeber gibt ein Signal über die Drehzahl und/oder gegebenenfalls auch die Lage (in diesem Beispiel eine Drehlage oder Winkel) an die folgende Regelschaltung ab.

Ein Regelantrieb 40 ist rechts im Bild vorgesehen. Er besitzt einen Motor 42 und einen ihn speisenden Umrichter 41. Er treibt über den Motor 42 eine Welle an. Die Welle hat eine Drehsteifigkeit $C_{CR}$. Der Regelantrieb 40 besitzt kein Getriebe, ist aber mit einem weiteren Drehgeber 46 gekoppelt, der als Ausgangssignal eine Drehzahl und/oder gegebenenfalls auch die Lage an die Regelschaltung 44 abgibt. Die Regelschaltung ist ausgebildet, über einen Drehzahlregler den Umrichter 41 anzusteuern.

Der Regelantrieb 40 erhält ein Stellsignal, das aus dem Regler 44 stammt. Der Regler 44 erhält als Sollwert $n_{diff}$ einen Wert, der proportional ist zu der Differenz aus dem Drehzahlsollwert $n_{soll}$ (für den gesamten Antrieb) und dem Istwert $n_{ist}$ des Gebers 45. Da der Geber 45 an die Hohlwelle des Leistungsantriebs gekoppelt ist, wird der Istwert $n_{List}$ genannt. Dadurch, dass die gebildete Differenz mit einem Verstärkungsfaktor A (größer oder kleiner "1") multipliziert wird, entsteht die Proportionalität $\underline{A} *n_{diff}$ als Sollwert für den Regler 44.

Aufgrund dieses Schaltungsaufbaus entsteht eine Regelung des Regelantriebs 40 so, dass er die Fehler des Leistungsantriebs, hier der beiden Leistungsantriebe 34, 34' nahezu vollständig kompensiert. Die Steuereinrichtung umfasst hier den Regler 44 und die Ansteuerung 44', sie steuert zumindest zwei Maschinen 42,34, hier auch eine dritte Maschine 34'.

Die Ansteuerung 44' der Leistungsantriebe erfolgt in Figur 2 links oben im Bild ersichtlich über den Umrichter 31 und ebenfalls angesteuert von dem Drehzahlsollwert $n_{soll}$ (für den gesamten Antrieb).

Berechnungen haben gezeigt, dass der Regelantrieb nicht mehr als 5% ... 10% der Leistung des Leistungsantriebs aufzubringen bräuchte. Dementsprechend fällt der Regelantrieb klein und kostengünstig aus.

**Beispiel für einen Linearantrieb.**

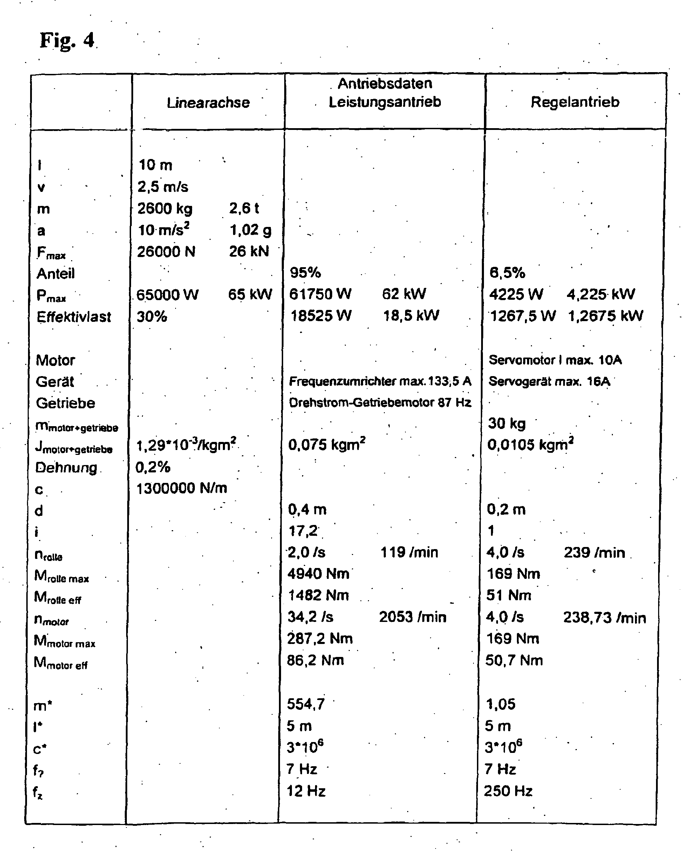

Ein konkretes Beispiel für einen Linearantrieb mit folgenden Daten verdeutlicht die Zusammenhänge, **vgl. Figur 4**

Mit diesem Doppelantrieb erhält der Gesamtantrieb in etwa das Verhalten als wenn die hohe Leistung von 65 kW über einen Direktantrieb ohne Getriebe auf den Zahnriemen übertragen würde.

**Regelung.**

Damit der Regelantrieb die Fehler des Leistungsantriebs ganz ausgleichen kann, wird die Verstärkung $\underline{A}$ passend gewählt. Am Bespiel des Linearantriebs kann die Verstärkung $\underline{A}$ ermittelt werden.

Der Leistungsantrieb aus Umrichter, Motor und Getriebe hat eine nichtlineare Übertragungsfunktion $\underline{L}$, der Regelantrieb aus Umrichter, Motor und Regelung die lineare Übertragungsfunktion $\underline{R}$ :

$$\underline{n}_{List} = \underline{L} \cdot \frac{i \cdot p}{\pi \cdot D_L} \cdot \frac{1}{i \cdot p} \cdot \underline{v}_{soll}.$$

(n.b.: trotz der nichtlinearen Verhältnisse wird vereinfachend die komplexe Darstellung genommen)

$$\underline{n}_{Rist} = \underline{R} \cdot \frac{1}{\pi \cdot D_R} \cdot \underline{A} \cdot (\underline{v}_{soll} - \underline{v}_{List})$$

Die Geschwindigkeit $\underline{v}$ der Masse $m$ ergibt sich aus der Kopplung der beiden Antriebe über den Zahnriemen aus der Überlagerung der beiden Drehzahlen.

$$\underline{v} = \underline{C}_{CL} \cdot \pi \cdot D_L \cdot \underline{n}_{List} + \underline{C}_{CR} \cdot \pi \cdot D_R \cdot \underline{n}_{Rist}$$

Dabei sind $\underline{C}_{CL}$ und $\underline{C}_{CR}$ die Übertragungsfunktionen zwischen den Zahnriemenrädern und der Masse $m$.

Zur Kompensation der Fehler des Leistungsantriebs wird die Verstärkung $\underline{A}$ folgendermaßen gewählt:

$$\underline{A} = \frac{\underline{C}_{CL}}{\underline{C}_{CR}} \cdot \frac{1}{\underline{R}}$$

Mit dieser Verstärkung werden die Fehler des Leistungsantriebs vollständig ausgeregelt. Dabei ist die erforderliche Verstärkung endlich, wenn nur ein begrenzter Frequenzbereich betrachtet wird:

$$\underline{A}' = \frac{\underline{C}_{CL}}{\underline{C}_{CR}} \cdot \frac{1}{\underline{R}} \text{ im Bereich } \omega = 0 \ldots \omega_{grenz}$$

Die Übertragungsfunktionen zwischen Leistungs- und Regelantrieb und der Masse ergeben sich aus der Zahnriemenelastizität abhängig von der aktuellen Position. Die Zahnriemenelastizitäten, die Masse und die Dämpfung ergeben die Übertragungsfunktionen

$$\underline{C}_{CL} = \frac{c_L}{c_L + c_R} \frac{1 + D \frac{s}{\omega_{0L}}}{1 + D \frac{s}{\omega_{0L}} + (\frac{s}{\omega_{0L}})^2}, \ \omega_{0L} = \sqrt{\frac{c_L + c_R}{m}}$$

$$\underline{C}_{CR} = \frac{c_R}{c_L + c_R} \frac{1 + D \frac{s}{\omega_{0R}}}{1 + D \frac{s}{\omega_{0R}} + (\frac{s}{\omega_{0R}})^2}, \ \omega_{0R} = \omega_{0L} = \sqrt{\frac{c_L + c_R}{m}}$$

Die Elastizitäten sind von der aktuellen Position abhängig. Wird der Koordinatenursprung in die Mitte gelegt, ergibt sich für die Elastizitäten:

$$c_R = c \cdot \frac{l}{l - 2x}$$

$$c_L = c \cdot \frac{l}{l + 2x}$$

Damit ergibt sich die Verstärkung $\underline{A}$ zur vollständigen Elimination der Fehler des Leistungsantriebs zu

$$\underline{A} = \frac{c_L}{c_R} \cdot \frac{1}{\underline{R}} = \frac{l - 2x}{l + 2x} \cdot \frac{1}{\underline{R}}$$

D.h. die Verstärkung ist bei begrenztem Frequenzbereich endlich und kann ohne Stabilitätsprobleme erreicht werden. Die Anpassung an die aktuelle Position geschieht mit der ohnehin gemessenen Lage (der bewegten Masse m).

Die Übertragungsfunktion $\underline{G}$ des Gesamtantriebs ist dann:

$$\underline{G} = \underline{C}_{CL} = \frac{c_L}{c_L + c_R} \frac{1 + D \frac{s}{\omega_{0L}}}{1 + D \frac{s}{\omega_{0L}} + (\frac{s}{\omega_{0L}})^2}$$

$$\underline{v} = \underline{G} \cdot \underline{v}_{soll}$$

Der Regelantrieb 10 oder 30 (aus 34',34) dient zur Korrektur von Fehlern in der Bewegung/Lage. Daher ist seine erforderliche Leistung von der Höhe der Fehler des Leistungsantriebs abhängig. Dabei spielt die Art des Fehlers eine Rolle für eine Korrekturleistung des Regelantriebs. Im Folgenden werden unterschiedliche Fehlermechanismen und der Einfluss einer Getriebelose betrachtet.

Eine Leistungsaufteilung kann zur Kompensation eines Drehmomentfehlers erfolgen. Solche Fehler können bei Umrichter betriebenen Antrieben aus elektromagnetischen Abweichungen des Leistungsantriebs und aus Regeldifferenzen zum Sollwert entstehen. Ebenso aus Temperaturdrift der Drehmoment-Strom-Kennlinie oder Abweichungen zwischen Motormodell und Motor oder Gleichstromanteilen des Umrichters und Unsymmetrien im Ausgangsstrom.

Beide Antriebe 10 und 20 wirken nach Figur 1a über die elastischen Übertragungselemente $C_{CL}$ und $C_{CR}$ auf die Last und erzeugen zusammen das Drehmoment M. Der Leistungsantrieb erzeugt das Drehmoment $M_{LA}$ mit dem Fehlern $\Delta M_{LA}$.

Handelt es sich um eine zeitlich konstante Abweichung wird im stationären Betrieb der Regelantrieb den Fehler ausgleichen und das Drehmoment $M_{RA}$ liefern, das (theoretisch) genauso groß ist wie der Drehmomentfehler $\Delta M_{LA}$. Praktisch ist es im Wesentlichen gleich groß. Der Regelantrieb stellt eine dementsprechende Leistung zur Verfügung.

Vielfach handelt es sich bei den Fehlern jedoch um periodische Drehmomentabweichungen. Der Drehmomentfehler hat dann angenähert einen sinusförmigen Zeitverlauf.

Aufgrund der Elastizität zwischen Regelantrieb und Last kann der Regelantrieb abhängig vom Drehmomentfehler einen Winkel zusätzlich zur Last zurücklegen. Daraus ergibt sich eine zusätzliche Winkelgeschwindigkeit und Beschleunigung für den Regelantrieb. Der Regelantrieb kann hierfür ein zusätzliches Drehmoment zur Beschleunigung aufbringen und damit auch eine höhere Leistung als für den stationären Drehmomentfehler aufweisen/abgeben.

Bei Antrieben mit Getrieben treten Abweichungen oft in Form eines Teilungsfehlers auf. Dies macht sich als Winkelfehler zwischen Leistungsantrieb und Last bemerkbar. Ursache sind Abweichungen in der Verzahnung und Exzentritäten der Zahnräder und Wellen des Getriebes. Eine Leistungsaufteilung erfolgt hierbei zur Kompensation des Winkelfehlers. Als Beispiel sei ein Ritzel mit einem Teilkreisdurchmesser von 60 mm und einem Eingriffswinkel von 30° betrachtet. Ein Höhenschlag des Ritzels von 50 $\mu$m führt zu einem tangentialen Fehler von 25 $\mu$m. Daraus ergibt sich ein Winkelfehler von $\pm 3$ arcmin. Der Fehler von insgesamt 6 arcmin kann vom Regelantrieb kompensiert werden.

Dazu kann der Regelantrieb den gesamten Antrieb so beschleunigen, dass der Winkelfehler eliminiert wird. Das dazu verwendete Drehmoment ist proportional zur Massenträgheit und dem Winkelfehler sowie quadratisch von der Drehzahl abhängig.

Eine Getriebelose macht sich bei einem Lastwechsel (bei der Drehmoment- oder Kraftumkehr) als ein Winkelfehler bemerkbar. Bei der mechanischen Kopplung eines (ersten) Leistungsantriebs mit einem (ersten) Regelantrieb wird der Regelantrieb das gesamte Drehmoment aufbringen, dies während der Zeitdauer, in der aufgrund der Lose der (erste) Leistungsantrieb kein Drehmoment übertragen kann. Die Leistungsaufteilung erfolgt dann zur Kompensation der Getriebelose.

**Vergleich mit Direktantriebslösung hinsichtlich Technik und Kosten.**

Der Doppelantrieb - als Beispiel eines Antriebs mit mehreren aktiven Maschinen oder "Antrieben" - hat in etwa das Verhalten als wenn die hohe Leistung von 65 kW über einen Direktantrieb ohne Getriebe auf den Zahnriemen übertragen würde.

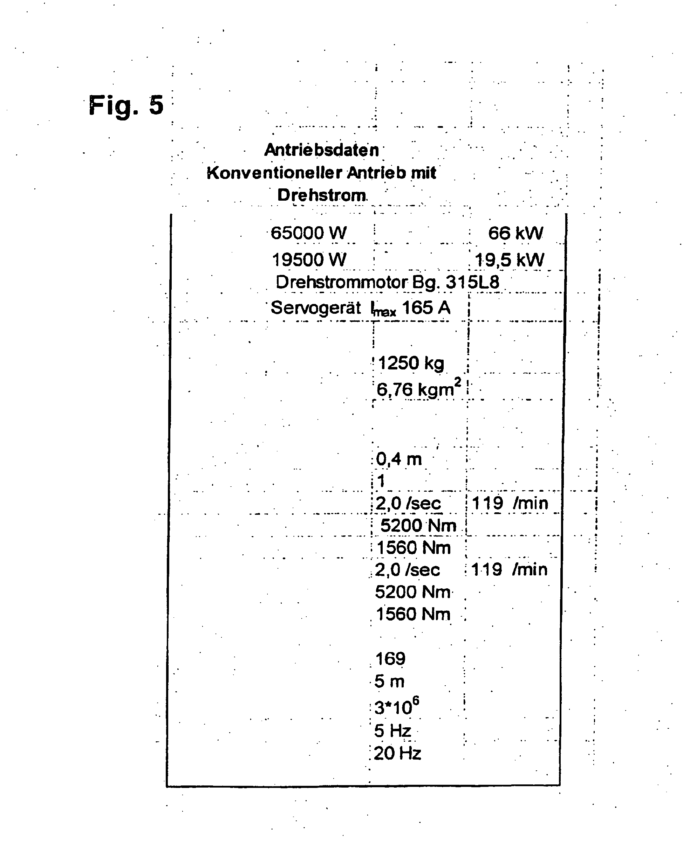

Hierbei wären z.B. folgende Komponenten als Direktantrieb erforderlich, **vgl**. **Figur 5.**

Der konventionelle Antrieb ist damit fast 4-mal so schwer wie der Doppelantrieb und hat eine 30% geringere Eigenfrequenz.

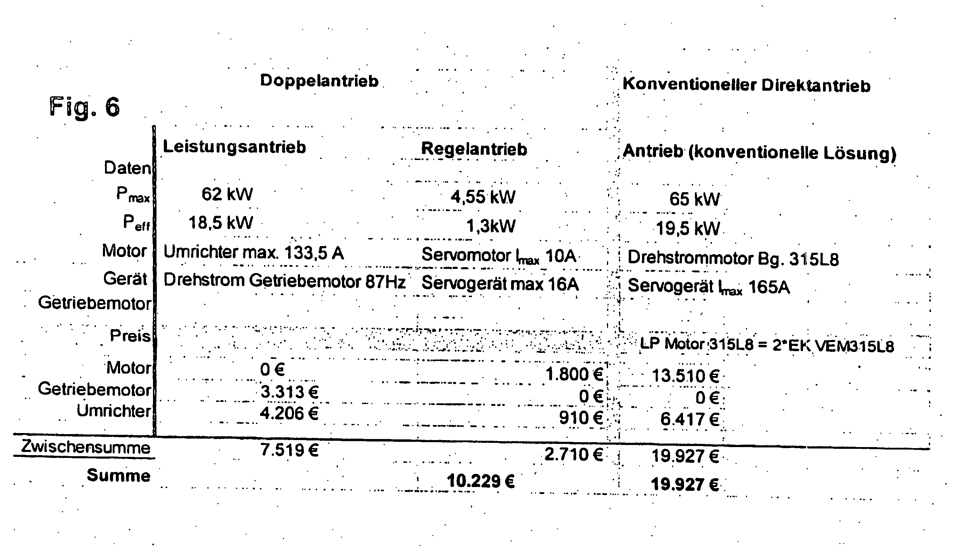

In der Figur 6 sind Preise für eine Realisierung mit Doppelantrieb (zwei Antriebe) und mit konventionellem Direktantrieb einander gegenüber gestellt. In Summe ist der Doppelantrieb des Beispiels fast 50% günstiger als der konventionelle Antrieb.

Der Doppelantrieb (auch der Mehrfachantrieb) hat also folgende wesentlichen Vorteile:

- geringere Kosten (im Beispiel fast 50% geringer)

- geringeres Gewicht (im Beispiel 70% weniger)

- höhere Eigenfrequenz (im Beispiel 40% höher)

- Aufbau des Leistungspfades aus Standard Komponenten

Das hier am Beispiel eines Linearantriebs mit Zahnriemen (und eines Walzenantriebs) erläuterte Verfahren lässt sich auf unterschiedlichste mechatronische Antriebe anwenden.

| Anstatt | Jetzt |
|---|---|
| • Linearmotor → | Linearantrieb mit Zahnriemen und zwei drehenden Antrieben. |
| • Linearmotor → | Linearantrieb mit einem drehenden Motor und einem kleinen Linearmotor für den Regelantrieb. |
| • Direktantrieb → | Antrieb mit Standardgetriebe. |
| • hochgenaues Robotergetriebe → | Standardgetriebe. |

In Summe entstehen Lösungen für genaue Antriebe aus kostengünstigen Standardkomponenten. Anwendungen sind z.B.

- Querschneider (Aufsynchronisieren auf die Bahngeschwindigkeit).

- Druckmaschinen (Synchronlauf zu den Druckmarken).

- Positionierantriebe für große Massen, z.B. Werkstückträger.

Der Doppelantrieb lässt sich mit weiteren Antrieben kombinieren; die ggf. mit in die Regelung einbezogen sind. Von den Antrieben können auch Antriebe bremsend sein, als direkte Bremse oder als bremsender Antrieb, insbesondere mit Bremschopper oder in der Form eines rückspeisenden elektrischen Antriebs mit Gleichspannungs-Zwischenkreis und Entropieerzeuger.

**Weitere Ausführungsbeispiele.**

**Ein Antrieb mit Servoantrieb und Drehstromgetriebemotor.**

**a) Anwendungsbeispiel**.
**Druckwalzen einer Druckmaschine mit Einzelantrieben.**

b) **Leistungsantrieb.**
Drehstrommotor am Netz mit spielbehaftetem Getriebe, Messung der Drehung am Getriebeausgang, elastische Verbindung zur Arbeitsmaschine.

c) **Regelantrieb.**
Servomotor ohne Getriebe, Ansteuerung mit Leistungselektronik mit Drehzahl und/ oder Lageregelung, Messung der Drehung im Servomotor, elastische Verbindung zur Arbeitsmaschine.

d) **Beschreibung.**
Der Drehstromgetriebemotor wird am starren Netz betrieben. Dadurch stellt er kostengünstig eine hohe Leistung zur Verfügung. Allerdings ist die Drehzahl belastungsabhängig und die Bewegung ist zu den anderen Antrieben der Druckmaschine nicht synchronisiert.
Der Regelantrieb vergleicht die Abweichung des Drehwinkels des Drehstromgetriebemotors am Getriebeausgang mit dem Drehwinkelsollwert. Die Abweichung wird zur Ansteuerung des Servoantriebs benutzt, der den Drehwinkel korrigiert. Da zur Regelung das vom Winkelfehler des Getriebemotors beeinflusste Signal am Getriebeausgang genommen wird, kann der Fehler des Drehstrom-Getriebemotors durch den Servomotor vollständig kompensiert werden.

**Ein Antrieb mit Pneumatikzylinder und Servomotor**.

a) **Anwendungsbeispiel**.
Roboterarm.

b) **Leistungantrieb**.
Pneumatikzylinder, wobei dessen Ventile vom Regelantrieb angesteuert werden. Der Pneumatikzylinder ist über die Nachgiebigkeit des Roboterarms elastisch mit dem Ende des Arms verbunden. Messung des Drehwinkels des Roboterarms.

c) **Regelantrieb**.
Permanentmagneterregter Synchron-Servomotor, Leistungselektronik mit Winkelregler, Drehwinkelmessung im Servomotor, elastische Verbindung des Servomotors über ein Gestänge mit dem Ende des Roboterarms. Die Pneumatikventile werden vom Motor angetrieben.

d) **Beschreibung**.
Der Pneumatikzylinder stellt den größten Teil der Kraft oder Leistung zu Bewegung des Arms zur Verfügung. Da diese Bewegung nur ungenau ist, korrigiert der Servomotor die Bewegung. Der Drehwinkel des Roboterarms liefert dabei die fehlerbehaftete Bewegung durch den Zylinder zur Korrektur der Bewegung durch den Servoantrieb. Da die Ansteuerung des Pneumatikzylinders durch den Servomotor erfolgt, sind keine elektromagnetischen Ventile oder gar geregelte Ventile erforderlich. Der Servomotor verbessert dabei sowohl die Positioniergenauigkeit als auch die Reaktionsgeschwindigkeit z.B. auf Störgrößen.

**Ein Antrieb aus Getriebemotor mit Frequenzumrichter und Servomotor als Direktantrieb ohne Getriebe.**

a) **Anwendungsbeispiel**.
Druckwalzenantrieb.

b) **Leistungantrieb**.
Drehstromgetriebemotor mit Standardgetriebe und Frequenzumrichter, Messung des Drehwinkels am Getriebeausgang, elastische Verbindung mit der Druckwalze.

c) **Regelantrieb**.
Servomotor, Servoumrichter, Messung des Drehwinkels im Servomotor, elastische Verbindung mit der Druckwalze.

d) **Beschreibung**.
Der Drehstromgetriebemotor mit Frequenzumrichter liefert kostengünstig die Leistung. Die Drehzahl kann dabei durch den Frequenzumrichter an die gewünschte Anlagengeschwindigkeit angepasst werden. Aufgrund des Verdrehspiels und des Übersetzungsfehlers des Standardgetriebes ist die Bewegung des Druckzylinders für ein gutes Druckergebnis nicht ausreichend. Der Servomotor greift hier ein, indem er die Bewegung des Drehstromgetriebemotors korrigiert. Da der Servomotor auch das dynamische Verhalten verbessert, kann die Druckwalze auch bei dynamischen Anforderungen nachgestellt werden und z.B. beim Mehrfarbdruck den Signalen der Passersteuerung folgen.

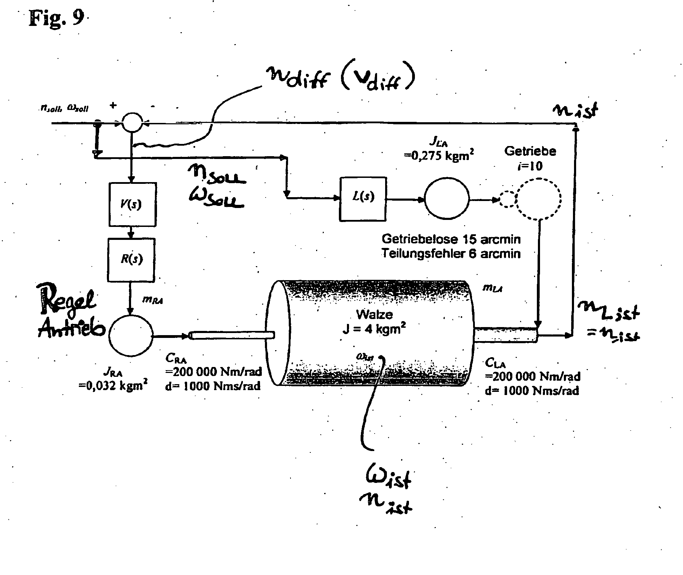

Ein Antriebsbeispiel mit 37 kW Nennleistung soll die Ergebnisse oberhalb von 20kW veranschaulichen. Der Antrieb wird beispielhaft simuliert mit 180 1/min und 2000 Nm. Der Antrieb dient als Gleichlaufantrieb und muss kleinen Sollwertänderungen um eine mittlere Drehzahl herum möglichst gut folgen. Als Leistungsantrieb ist ein Asynchron-Getriebemotor mit Frequenzumrichter eingesetzt. Als Regelantrieb ist ein getriebeloser Permanentmagnet-Servomotor mit Servoumrichter verwendet. Weitere Daten ergeben sich aus der Figur 9.

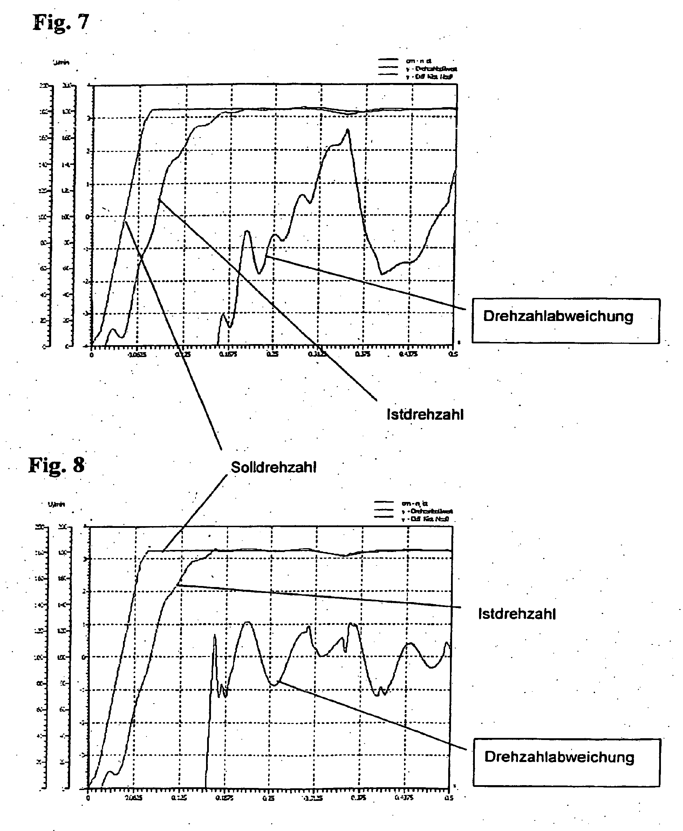

**Figur 7** zeigt den Zeitverlauf der Solldrehzahl, der Istdrehzahl und der Drehzahlabweichung beim Leistungsantrieb. In Figur 7 ist der Zeitverlauf der Drehzahl für den Leistungsantrieb ohne Regelantrieb gezeigt. Die Solldrehzahl weist nach dem Hochlauf auf 180 1/min einen Sattel auf, der den Eingriff einer überlagerten Winkelgleichlaufregelung repräsentiert. Deutlich ist zu sehen, dass der Leistungsantrieb dem Sollwert nur sehr verzögert folgt und auf die Sollwertänderungen kaum reagiert. Entsprechend zeigt die Differenz zwischen Solldrehzahl und Istdrehzahl Schwankungen von 4,5 1/min.

**Figur 8** zeigt den Drehzahlverlauf mit Eingriff des Regelantriebes und gemäß den vorigen Beispielen des zusätzlichen Antriebs. Der Regelantrieb ist dabei über eine stark vereinfachte Übertragungsfunktion mit Tiefpass zweiter Ordnung eingebunden. Mit dieser sehr einfachen Regelung lässt sich die Drehzahlabweichung bereits auf weniger als die Hälfte des Ursprungswertes reduzieren, auf etwa 2 1/min.

**Liste Formelzeichen**

$n_{List}$    Istdrehzahl des Leistungsantriebs

$\underline{L}$    Übertragungsfunktion des Leistungsantriebs

i    Getriebeübersetzung

$p$    Polpaarzahl des Motors

$D_L$    Durchmesser der Rolle des Leistungsantriebs

$v_{soll}$    Sollgeschwindigkeit

$n_{Rist}$    Istdrehzahl des Regelantriebs

$\underline{A}$    Übertragungsfunktion des Reglers für eine vollständige Kompensation

$D_R$    Durchmesser der Rolle des Regelantriebs

$\underline{A}'$    Übertragungsfunktion des Reglers für eine weitgehende Kompensation in einem begrenzten Frequenzbereich

$\underline{v}$    Geschwindigkeit

$\underline{C}_{CL}$    Übertragungsfunktion der elastischen Verbindung des Leistungsantriebs mit der Last

$\underline{C}_{CR}$    Übertragungsfunktion der elastischen Verbindung des Regelantriebs mit der Last

ω       Kreisfrequenz

$\omega_{grenz}$    oberste Kreisfrequenz des.Übertragungsbereichs

$D$       Dämpfungsmaß

$C$       Steifigkeit

$C_L$      Steifigkeit zwischen Leistungsantrieb und Last

$C_R$      Steifigkeit zwischen Regelantrieb und Last

$\omega_0$      Eigenkreisfrequenz

$\omega_{0L}$    Eigenkreisfrequenz der elastischen Verbindung des Leistungsantriebs mit der Last

$\omega_{0R}$    Eigenkreisfrequenz der elastischen Verbindung des Regelantriebs mit der Last

$l$        Länge

$x$       aktuelle Position

$s$       Laplacetransformierte

$m$      Masse

$\underline{G}$      Gesamtübertragungsfunktion des Antriebs

## Patentansprüche

1. **Antriebseinrichtung** für Bewegungen rotatorischer und/oder translatorischer Art, die Antriebseinrichtung ausgebildet mit mehreren Antrieben (10,20;30,34,34',40) zum gemeinsamen Antrieb einer Arbeitsmaschine oder zur Bewegung einer Masse, umfassend

   - zumindest einen ersten Antrieb (10,34) zur Bereitstellung der Leistung als Leistungsantrieb;
   - zumindest einen zweiten Antrieb (20,40) zur Steuerung oder Regelung der Genauigkeit oder Dynamik als Regelantrieb;
   - eine Steuereinrichtung (24,14;44,44'), welche ausgebildet und eingerichtet ist, die zumindest zwei Antriebe (10,20) als gesamten Antrieb anzusteuern und zu regeln;
   und **dadurch gekennzeichnet, dass**
   - die Steuereinrichtung (24,14;44,44') weiter ausgebildet und eingerichtet ist, dem Regelantrieb (20,40) eine Differenz ($V_{diff}$) aus einem Geschwindigkeitssollwert für den gesamten Antrieb und einem Istwert eines Gebers (TX) des Leistungsantriebs als Sollwert zuzuführen und diese Differenz mit einem Faktor (A) zu multiplizieren sowie dem Regelantrieb als Sollwert vorzugeben, dass vom Regelantrieb (20,40) Fehler des Leistungsantriebs (10,34) zumindest im Wesentlichen kompensierfähig sind.

2. Antriebseinrichtung nach Anspruch 1, wobei die Antriebe (10,20) elektrische Antriebe, pneumatische Antriebe, hydraulische Antriebe, Antriebe mit Verbrennungskraftmaschinen oder Strömungsmaschinen oder Kombinationen aus diesen Antrieben sind, insbesondere ausgerüstet mit mechanischem Getriebe, hydraulischem Getriebe oder einer Koppeleinheit.

3. Antriebseinrichtung nach einem der vorhergehenden Ansprüche, wobei zumindest einer der Antriebe ein Elektromotor (33,33',12,22) ist, der von einer Leistungselektronik betreibbar ist; oder
   der zumindest eine Leistungsantrieb (10,34) als erster Antrieb ein Getriebemotor ist; oder
   zumindest einer der Antriebe als Bremse ausgebildet ist, insbesondere als ein Elektromotor mit einem auf einen Bremschopper speisenden Umrichter; oder
   der zumindest eine Leistungsantrieb (10,34) ein Pneumatikzylinder oder Hydraulikzylinder ist.

4. Antriebseinrichtung nach einem der vorhergehenden Ansprüche, wobei der zumindest eine Regelantrieb (20,40) ein Elektromotor oder Elektrolinearmotor ist.

5. Antriebseinrichtung nach einem der vorhergehenden Ansprüche, wobei eine Umsetzung von rotatorischer Bewegungsart in eine lineare Bewegung durch ein Gestänge, Zahnstange, Zahnriemen oder Spindel vorhanden ist oder erfolgt.

6. Antriebseinrichtung nach einem der vorhergehenden Ansprüche, wobei die zumindest zwei Antriebe jeweils über ein elastisches Kuppelelement mit der Arbeitsmaschine oder der Masse (90) gekoppelt sind.

7. Antriebseinrichtung nach einem der vorhergehenden Ansprüche, wobei an dem zumindest einen Leistungsantrieb (10,34) zumindest ein Sensor (25,45) zur Messung der Bewegung des Leistungsantriebs vorhanden ist, oder an dem zumindest einen Regelantrieb (20,40) ein Sensor (26,46) zur Messung der Bewegung des Regelantriebs vorhanden ist.

8. Antriebseinrichtung nach einem der vorhergehenden Ansprüche, wobei eine Regeleinheit (24,44) ausgebildet ist, die Bewegung des zumindest einen Leistungsantriebs (10,34) auszuwerten und zur Steuerung des zumindest einen Regelantriebs (20,40) zu verwenden.

9. Antriebseinrichtung nach Anspruch 7, wobei der Sensor (25,45) zur Messung der Bewegung ein Tachogenerator, ein Resolver, ein Beschleunigungssensor, ein optischer Inkrementalgeber, ein magnetischer Inkrementalgeber, ein optischer Absolutwertgeber oder ein magnetischer Absolutwertgeber ist.

10. Antriebseinrichtung nach einem der vorhergehenden Ansprüche 1 bis 7, wobei eine Regeleinheit (24,44) ausgebildet ist, die Bewegung (26,46) des Regelantriebs auszuwerten und den Regelantrieb (20,40) zu regeln, insbesondere die Regeleinheit aufgebaut ist, mit linearen und nichtlinearen Größen zu arbeiten und/oder einen Beobachter enthält und/oder einen Zustandsregler enthält.

11. Antriebseinrichtung nach Anspruch 10, wobei die Parameter der Regeleinheit so gewählt sind, dass in einem festgelegten Frequenzbereich die Fehler des zumindest einen Leistungsantriebs nahezu vollständig kompensierfähig sind, oder die Parameter der Regeleinheit so gewählt sind, dass in einem gegebenen Frequenzbereich Fehler des zumindest einen Leistungsantriebs zumindest im Wesentlichen kompensierfähig sind.

12. Antriebseinrichtung nach einem der vorhergehenden Ansprüche, wobei der Leistungsantrieb und der Regelantrieb zu einer baulichen Einheit zusammengefasst sind, oder der Regelantrieb und die Regeleinrichtung zu einer baulichen Einheit zusammengefasst sind, oder die Leistungselektronik und die Regeleinheit zu einer Einheit zusammengefasst sind, insbesondere alle Komponenten zu einer baulichen Einheit zusammengefasst sind.

13. Steuerverfahren einer Antriebseinrichtung für Bewegungen rotatorischer und/oder translatorischer Art, wobei die Antriebseinrichtung (10,20,34,34') beim gemeinsamen Antreiben einer Arbeitsmaschine oder beim Bewegen einer Masse mehrere Antriebe aufweist, und wobei

- eine Steuereinrichtung (24,14) die zumindest zwei Antriebe (20,34,34';10,20) ansteuert und regelt, und dabei
- zumindest ein Antrieb die Bereitstellung der Leistung als Leistungsantrieb erfüllt,
- zumindest ein Antrieb die Steuerung oder Regelung einer mechanischen Genauigkeit und/oder einer Dynamik als Regelantrieb vornimmt;
- der Regelantrieb (20,40) als Sollwert eine Differenz ($V_{diff}$) aus einem Geschwindigkeitssollwert ($v,\omega$) für den gesamten Antrieb und einem Istwert eines Gebers (TX,25,45) des Leistungsantriebs (10;34,34') erhält, diese Differenz mit einem Faktor (A) multipliziert wird und dem Regelantrieb (20,40) als Sollwert vorgegeben wird, wodurch der Regelantrieb veranlasst wird, Fehler rotatorischer und/oder translatorischer Art des Leistungsantriebs (10) vollständig oder zumindest im Wesentlichen zu kompensieren.

14. Steuereinrichtung für eine Antriebseinrichtung zum Ausführen von Bewegungen rotatorischer und/oder translatorischer Art, welche Antriebseinrichtung mehrere Antriebe (10,20;34,34',40) zum gemeinsamen Antrieb einer Arbeitsmaschine oder zur gemeinsamen Bewegung einer Masse aufweist und zumindest ein Antrieb die Bereitstellung der Leistung als Leistungsantrieb erfüllt, und zumindest ein Antrieb die Steuerung oder Regelung einer mechanischen Genauigkeit und/oder einer Dynamik als Regelantrieb vornimmt, und die Steuereinrichtung ausgebildet ist, die zumindest zwei Antriebe anzusteuern und zu regeln;

**dadurch gekennzeichnet, dass** die Steuereinrichtung (14, 24) ausgebildet und angepasst ist, eine Differenz ($V_{diff}$) aus einem Geschwindigkeitssollwert (v,ω) des gesamten Antriebs und einem Istwert eines Gebers (TX,25,45) des Leistungsantriebs (10;34,34') als Sollwert für den Regelantrieb (20,40) zu bilden und diese Differenz mit einem Faktor (A) multipliziert dem Regelantrieb (20,40) als Sollwert vorgebbar ist, um den Regelantrieb zu veranlassen, Fehler rotatorischer und/oder translatorischer Art des Leistungsantriebs (10) zumindest im Wesentlichen oder vollständig zu kompensieren.

**Claims**

1. Drive device for movements of rotational and/or translational type, the drive device formed by several drives (10, 20; 30, 34, 34', 40) for joint driving of a processing machine or for movement of a mass comprising

   - at least one first drive (10, 34) for providing the power as a power drive;
   - at least one second drive (20, 40) for control or regulation of precision or dynamics as the regulating drive;
   - a control device (24, 14; 44, 44') which is designed and equipped to activate and to regulate the at least two drives (10, 20) as an overall drive;
   and **characterised in that**
   - the control device (24, 14; 44, 44') is further designed and equipped to feed to the regulating drive (20, 40) a difference ($V_{diff}$) from a theoretical speed value for the overall drive and an actual value of a transmitter (TX) of the power drive as a theoretical value and to multiply this difference by a factor (A) and to forward the result to the regulating drive as a theoretical value, **in that** errors of the power drive (10, 34) can be compensated at least substantially by the regulating drive (20, 40).

2. Drive device according to claim 1, wherein the drives (10, 20) are electric drives, pneumatic drives, hydraulic drives, drives with combustion engines or turbo engines or combinations of these drives, in particular fitted with mechanical gears, hydraulic gears or a coupling unit.

3. Drive device according to one of the preceding claims, wherein at least one of the drives is an electric motor (33, 33', 12, 22) which can be operated by power electronics; or the at least one power drive (10, 34) as a first drive is a geared motor; or
   at least one of the drives is designed as a brake, in particular as an electric motor with a converter feeding via a braking chopper; or the at least one power drive (10, 34) is a pneumatic cylinder or hydraulic cylinder.

4. Drive device according to one of the preceding claims, wherein the at least one regulating drive (20, 40) is an electric motor or electric linear motor.

5. Drive device according to one of the preceding claims, wherein a conversion of rotational movement type to a linear movement is present or effected by rods, rack, toothed belt or spindle.

6. Drive device according to one of the preceding claims, wherein the at least two drives are coupled in each case to the processing machine or the mass (90) via a resilient coupling element.

7. Drive device according to one of the preceding claims, wherein at least one sensor (25, 45) for measuring the movement of the power drive is present on the at least one power drive (10, 34), or a sensor (26, 46) for measuring the movement of the regulating drive is present on the at least one regulating drive (20, 40).

8. Drive device according to one of the preceding claims, wherein a regulating unit (24, 44) is designed to evaluate the movement of the at least one power drive (10, 34) and to use the result to control the at least one regulating drive (20, 40).

9. Drive device according to claim 7, wherein the sensor (25, 45) for measuring the movement is a tachogenerator, a resolver, an acceleration sensor, an optical incremental transmitter, a magnetic incremental transmitter, an optical absolute value transmitter or a magnetic absolute value transmitter.

10. Drive device according to one of the preceding claims 1 to 7, wherein a regulating unit (24, 44) is designed to evaluate the movement (26, 46) of the regulating drive and to regulate the regulating drive (20, 40), in particular the regulating unit is constructed to operate with linear and non-linear parameters and/or contains an observer and/or contains a state regulator.

11. Drive device according to claim 10, wherein the parameters of the regulating unit are selected so that in a fixed frequency range, the errors of the at least one power drive can be compensated almost completely, or the parameters of the regulating unit are selected so that in a given frequency range, errors of the at least one power drive can be compensated at least substantially.

12. Drive device according to one of the preceding claims, wherein the power drive and the regulating drive are combined to form a structural unit, or the regulating drive and the regulating device are combined to form a structural unit, or the power electronics and the regulating unit are combined to form a unit, in particular all components are combined to form a structural unit.

13. Control method of a drive device for movements of rotational and/or translational type, wherein the drive device (10, 20, 34, 34') during joint driving of a processing machine or during movement of a mass has several drives, and wherein

- a control device (24, 14) activates and regulates the at least two drives (20, 34, 34'; 10, 20), and thus
- at least one drive carries out the provision of power as the power drive,
- at least one drive executes control or regulation of mechanical precision and/or dynamics as the regulating drive;
- the regulating drive (20, 40) receives as a theoretical value, a difference ($V_{diff}$) from a theoretical speed value (v, $\omega$) for the overall drive and an actual value of a transmitter (TX, 25, 45) of the power drive (10; 34, 34'), this difference is multiplied by a factor (A) and is forwarded to the regulating drive (20, 40) as a theoretical value, as a result of which the regulating drive is triggered to compensate errors of rotational and/or translational type of the power drive (10) completely or at least substantially.

14. Control device for a drive device for executing movements of rotational and/or translational type, which drive device has several drives (10, 20; 34, 34', 40) for joint driving of a processing machine or for joint movement of a mass and at least one drive carries out the provision of power as the power drive, and at least one drive executes control or regulation of mechanical precision and/or dynamics as the regulating drive, and the control device is designed to activate and to regulate the at least two drives;
**characterised in that** the control device (14, 24) is designed and adapted to form a difference ($V_{diff}$) from a theoretical speed value (v, $\omega$) of the overall drive and an actual value of a transmitter (TX, 25, 45) of the power drive (10; 34, 34') as a theoretical value for the regulating drive (20, 40) and this difference multiplied by a factor (A) can be forwarded to the regulating drive (20, 40) as a theoretical value to trigger the regulating drive to compensate errors of rotational and/or translational type of the power drive (10) at least substantially or completely.

**Revendications**

1. Dispositif d'entraînement pour des mouvements de nature rotative et/ou translatoire, le dispositif d'entraînement comportant plusieurs mécanismes d'entraînement (10, 20; 30, 34, 34', 40) pour l'entraînement commun d'une machine de travail ou pour le déplacement d'une masse, comprenant:

- au moins un premier mécanisme d'entraînement (10, 34) pour fournir la puissance en faisant office de mécanisme d'entraînement de puissance;
- au moins un deuxième mécanisme d'entraînement (20, 40) pour la commande ou la régulation de la précision ou de la dynamique en tant que mécanisme d'entraînement de régulation;
- un dispositif de commande (24, 14; 44, 44'), qui est conçu et réalisé pour commander et réguler les au moins deux mécanismes d'entraînement (10, 20) en tant que mécanisme d'entraînement global,
et **caractérisé en ce que**
- le dispositif de commande (24, 14; 44, 44') est en outre conçu et réalisé pour ajouter comme valeur de consigne au mécanisme d'entraînement de régulation (20, 40) une différence ($V_{diff}$) entre une valeur de consigne de vitesse pour le mécanisme d'entraînement global et une valeur réelle d'un capteur (TX) du mécanisme d'entraînement de puissance et pour multiplier cette différence par un facteur (A), ainsi que pour l'affecter en tant que valeur de consigne au mécanisme d'entraînement de régulation, de telle manière que des erreurs du mécanisme d'entraînement de puissance (10, 34) puissent être au moins essentiellement compensées par le mécanisme d'entraînement de régulation (20, 40).

2. Dispositif d'entraînement selon la revendication 1, dans lequel les mécanismes d'entraînement (10, 20) sont des mécanismes d'entraînement électriques, des mécanismes d'entraînement pneumatiques, des mécanismes d'entraînement hydrauliques, des mécanismes d'entraînement avec des moteurs à combustion interne ou des turbomachines ou des combinaisons de ces mécanismes d'entraînement, équipés en particulier d'une transmission mécanique, d'une transmission hydraulique ou d'une unité de couplage.

3. Dispositif d'entraînement selon l'une quelconque des revendications précédentes, dans lequel au moins un des mécanismes d'entraînement est un moteur électrique (33, 33', 12, 22), qui peut être commandé par une électronique de puissance, ou ledit au moins un mécanisme d'entraînement de puissance (10, 34) en tant que premier mécanisme d'entraînement est un moto-réducteur, ou au moins un des mécanismes d'entraînement est réalisé sous la forme d'un frein, en particulier d'un moteur électrique avec un convertisseur de fréquence alimentant un hacheur de freinage; ou ledit au moins un mécanisme d'entraînement de puissance (10, 34) est un vérin pneumatique ou un vérin hydraulique.

4. Dispositif d'entraînement selon l'une quelconque des revendications précédentes, dans lequel ledit au moins un mécanisme d'entraînement de régulation (20, 40) est un moteur électrique ou un moteur électrique linéaire.

5. Dispositif d'entraînement selon l'une quelconque des revendications précédentes, dans lequel une conversion d'un mouvement de nature rotative en un mouvement linéaire est présente ou est effectuée par une tringle, une crémaillère, une courroie dentée ou une broche.

6. Dispositif d'entraînement selon l'une quelconque des revendications précédentes, dans lequel lesdits au moins deux mécanismes d'entraînement sont respectivement couplés à la machine de travail ou à la masse (90) au moyen d'un élément de couplage élastique.

7. Dispositif d'entraînement selon l'une quelconque des revendications précédentes, dans lequel il se trouve sur ledit au moins un mécanisme d'entraînement de puissance (10, 34) au moins un capteur (25, 45) destiné à mesurer le déplacement du mécanisme d'entraînement de puissance, ou il se trouve sur ledit au moins un mécanisme d'entraînement de régulation (20, 40) un capteur (26, 46) destiné à mesurer le déplacement du mécanisme d'entraînement de régulation.

8. Dispositif d'entraînement selon l'une quelconque des revendications précédentes, dans lequel une unité de régulation (24, 44) est prévue pour évaluer le déplacement dudit au moins un mécanisme d'entraînement de puissance (10, 34) et pour l'utiliser pour la commande dudit au moins un mécanisme d'entraînement de régulation (20, 40).

9. Dispositif d'entraînement selon la revendication 7, dans lequel le capteur (25, 45) destiné à mesurer le déplacement est une génératrice tachymétrique, un résolveur, un détecteur d'accélération, un capteur optique incrémental, un capteur magnétique incrémental, un capteur optique en valeurs absolues ou un capteur magnétique en valeurs absolues.

10. Dispositif d'entraînement selon l'une quelconque des revendications précédentes 1 à 7, dans lequel une unité de régulation (24, 44) est prévue pour évaluer le déplacement (26, 46) du mécanisme d'entraînement de régulation et pour réguler le mécanisme d'entraînement de régulation (20, 40), en particulier l'unité de régulation est construite pour travailler avec des grandeurs linéaires et non linéaires et/ou contient un observateur et/ou contient un régulateur d'état.

11. Dispositif d'entraînement selon la revendication 10, dans lequel les paramètres de l'unité de régulation sont choisis de telle manière que, dans un domaine de fréquence fixé, les erreurs dudit au moins un mécanisme d'entraînement de puissance puissent être presque complètement compensées, ou les paramètres de l'unité de régulation sont choisis de telle manière que, dans un domaine de fréquence donné, des erreurs dudit au moins un mécanisme d'entraînement de puissance puissent être au moins pour l'essentiel compensées.

12. Dispositif d'entraînement selon l'une quelconque des revendications précédentes, dans lequel le mécanisme d'entraînement de puissance et le mécanisme d'entraînement de régulation sont rassemblés en une unité de construction, ou le mécanisme d'entraînement de régulation et le dispositif de régulation sont rassemblés en une unité de construction, ou l'électronique de puissance et l'unité de régulation sont rassemblées en une unité, en particulier tous les composants sont rassemblés en une unité de construction.

13. Procédé de commande d'un dispositif d'entraînement pour des mouvements de nature rotative et/ou translatoire, dans lequel le dispositif d'entraînement (10, 20; 34, 34') présente plusieurs mécanismes d'entraînement lors de l'entraînement commun d'une machine de travail ou lors du déplacement d'une masse, et dans lequel

- un dispositif de commande (24, 14) commande et régule lesdits au moins deux mécanismes d'entraînement (20, 34, 34'; 10, 20), et en l'occurrence
- au moins un mécanisme d'entraînement assure la fourniture de la puissance en faisant office de mécanisme d'entraînement de puissance,
- au moins un mécanisme d'entraînement opère la commande ou la régulation d'une précision mécanique et/ou d'une dynamique en faisant office de mécanisme d'entraînement de régulation;
- le mécanisme d'entraînement de régulation (20, 40) reçoit comme valeur de consigne une différence ($V_{diff}$) entre une valeur de consigne de la vitesse (v, ω) pour le mécanisme d'entraînement global et une valeur réelle d'un capteur (TX, 25, 45) du mécanisme d'entraînement de puissance (10; 34, 34'), on multiplie cette différence par un facteur (A) et on l'affecte comme valeur de consigne au mécanisme d'entraînement de régulation (20, 40), le mécanisme d'entraînement de régulation étant ainsi amené à compenser complètement ou au moins pour l'essentiel les erreurs de nature rotative et/ou translatoire du mécanisme d'entraînement de puissance (10).

14. Dispositif de commande pour un dispositif d'entraînement pour l'exécution de mouvements de nature rotative et/ou translatoire, dans lequel le dispositif d'entraînement présente plusieurs mécanismes d'entraînement (10, 20; 34, 34', 40) pour l'entraînement commun d'une machine de travail ou pour le déplacement d'une masse et au moins un mécanisme d'entraînement assure la fourniture de la puissance en tant que mécanisme d'entraînement de puissance, et au moins un mécanisme d'entraînement opère la commande ou la régulation d'une précision mécanique et/ou d'une dynamique en faisant office de mécanisme d'entraînement de régulation, et le dispositif de commande est prévu pour commander et réguler lesdits au moins deux mécanismes d'entraînement; **caractérisé en ce que** le dispositif de commande (14, 24) est prévu et adapté pour former, comme valeur de consigne pour le mécanisme d'entraînement de régulation (20, 40), une différence ($V_{diff}$) entre une valeur de consigne de la vitesse (v, ω) du mécanisme d'entraînement global et une valeur réelle d'un capteur (TX, 25, 45) du mécanisme d'entraînement de puissance (10; 34, 34') et cette différence, multipliée par un facteur (A), peut être affectée au mécanisme d'entraînement de régulation (20, 40) en tant que valeur de consigne, pour amener le mécanisme d'entraînement de régulation à compenser, au moins pour l'essentiel ou complètement, des erreurs de nature rotative et/ou translatoire, du mécanisme d'entraînement de puissance (10).

Figur 1

$V_{soll}$

$V_{diff}$    A

$V_{List}$

$n_{List}$

14    $\dfrac{i \cdot P}{\pi \cdot D_L}$    +  −    $\dfrac{1}{\pi \cdot D_R}$    +  −    $n_{List}$    24'    24

n-Regler    21

11    3∿    $\pi \cdot D_L$    3∿    $U_{R,ist}$

$n_{List}$

TX    25    bewegte Masse

12    M    3∿    13    $C_L$    M    $V$    $C_R$    3∿    M    TX    26

$D_L$    Zahnriemen    $D_R$    22

10    Z    20

Leistungsantrieb    Regelantrieb

EP 2 122 426 B1

**10**
**Leistungsantrieb**

$n_{List}$

$3\sim$  An

$C_{CL}$

$n_{ist}$
$\omega_{ist}$

Last

$M$

$3\sim$  An

$C_{CR}$

**Regelantrieb**
**20**

**Fig. 1a**

**Figur 2**

$n_{soll}$

$n_{soll}$

$n_{diff}$

$\cancel{\otimes} \leftarrow \mathcal{L} \bullet P \quad \}44'$

f

A

$n_{List}$

n-Regler

$n_{Rist}$

44

$3\mathcal{N}$

31

$C_{CL2}$

Druckwalze

45

TX

$3\sim$

M

90

41

3

$32'$   $33'$

$30 \triangleq 34 + 34'$

40

$34'$

$C_{CL1}$

42

46

$3\sim$

Getriebe

TX

$C_{CL} = C_{CL1} + C_{CL2} \rightarrow$   32

M

33

34

Figur 3

# Fig. 4

| | Linearachse | | Antriebsdaten Leistungsantrieb | | Regelantrieb | |
|---|---|---|---|---|---|---|
| l | 10 m | | | | | |
| v | 2,5 m/s | | | | | |
| m | 2600 kg | 2,6 t | | | | |
| a | 10 m/s$^2$ | 1,02 g | | | | |
| $F_{max}$ | 26000 N | 26 kN | | | | |
| Anteil | | | 95% | | 6,5% | |
| $P_{max}$ | 65000 W | 65 kW | 61750 W | 62 kW | 4225 W | 4,225 kW |
| Effektivlast | 30% | | 18525 W | 18,5 kW | 1267,5 W | 1,2675 kW |
| Motor | | | | | Servomotor I max. 10A | |
| Gerät | | | Frequenzumrichter max. 133,5 A | | Servogerät max. 16A | |
| Getriebe | | | Drehstrom-Getriebemotor 87 Hz | | | |
| $m_{motor+getriebe}$ | | | | | 30 kg | |
| $J_{motor+getriebe}$ | 1,29*10$^{-3}$/kgm$^2$ | | 0,075 kgm$^2$ | | 0,0105 kgm$^2$ | |
| Dehnung | 0,2% | | | | | |
| c | 1300000 N/m | | | | | |
| d | | | 0,4 m | | 0,2 m | |
| i | | | 17,2 | | 1 | |
| $n_{rolle}$ | | | 2,0 /s | 119 /min | 4,0 /s | 239 /min |
| $M_{rolle\ max}$ | | | 4940 Nm | | 169 Nm | |
| $M_{rolle\ eff}$ | | | 1482 Nm | | 51 Nm | |
| $n_{motor}$ | | | 34,2 /s | 2053 /min | 4,0 /s | 238,73 /min |
| $M_{motor\ max}$ | | | 287,2 Nm | | 169 Nm | |
| $M_{motor\ eff}$ | | | 86,2 Nm | | 50,7 Nm | |
| $m^*$ | | | 554,7 | | 1,05 | |
| $l^*$ | | | 5 m | | 5 m | |
| $c^*$ | | | 3*10$^6$ | | 3*10$^6$ | |
| $f_?$ | | | 7 Hz | | 7 Hz | |
| $f_z$ | | | 12 Hz | | 250 Hz | |

## Fig. 5

**Antriebsdaten**
**Konventioneller Antrieb mit**
**Drehstrom**

| | | |
|---|---|---|
| 65000 W | | 66 kW |
| 19500 W | | 19,5 kW |
| Drehstrommotor Bg. 315L8 | | |
| Servogerät $I_{max}$ 165 A | | |
| | | |
| 1250 kg | | |
| 6,76 kgm$^2$ | | |
| | | |
| 0,4 m | | |
| 1 | | |
| 2,0 /sec | 119 /min | |
| 5200 Nm | | |
| 1560 Nm | | |
| 2,0 /sec | 119 /min | |
| 5200 Nm | | |
| 1560 Nm | | |
| | | |
| 169 | | |
| 5 m | | |
| 3*10$^6$ | | |
| 5 Hz | | |
| 20 Hz | | |

## Fig. 6

EP 2 122 426 B1

| Daten | Doppelantrieb | | Konventioneller Direktantrieb |
| --- | --- | --- | --- |
| | Leistungsantrieb | Regelantrieb | Antrieb (konventionelle Lösung) |
| $P_{max}$ | 62 kW | 4,55 kW | 65 kW |
| $P_{eff}$ | 18,5 kW | 1,3kW | 19,5 kW |
| Motor | Umrichter max. 133,5 A | Servomotor $I_{max}$ 10A | Drehstrommotor Bg. 315L8 |
| Gerät | Drehstrom Getriebemotor 87Hz | Servogerät max 16A | Servogerät $I_{max}$ 165A |
| Getriebemotor | | | |
| Preis | | | LP Motor 315L8 = 2*EK VEM315L8 |
| Motor | 0 € | 1.800 € | 13.510 € |
| Getriebemotor | 3.313 € | 0 € | 0 € |
| Umrichter | 4.206 € | 910 € | 6.417 € |
| Zwischensumme | 7.519 € | 2.710 € | 19.927 € |
| Summe | | 10.229 € | 19.927 € |

**Fig. 7**

Drehzahlabweichung

Istdrehzahl

Solldrehzahl

**Fig. 8**

Istdrehzahl

Drehzahlabweichung

Fig. 9

**EP 2 122 426 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

*   US 5656903 A, Shui Fang